# EUROPEAN PATENT APPLICATION

(11) **EP 2 819 366 A1**
(43) Date of publication of application: **31.12.2014**
(21) Application number: 13305907.1
(22) Date of filing: 28.06.2013
(51) Int. Cl.: H04L 29/06

(54) **Method for adapting the behavior of a cache, and corresponding cache**

(71) Applicant: Thomson Licensing, 92130 Issy-les-Moulineaux (FR)
(72) Inventor: Gouache, Stéphane, 35576 Cesson-Sévigné (FR); Taibi, Charline, 35576 Cesson-Sévigné (FR); Houdaille, Rémi, 35576 Cesson-Sévigné (FR)
(74) Representative: Huchet, Anne

(57) **Abstract**

The invention concerns a method for adapting the behavior of a cache located along the transmission path between a client terminal and a server, such a client terminal being able to receive from the server content parts of a multimedia content, characterized in that it comprises the steps of:
- upon request (S0), by a first client terminal, for a content part not stored in the cache, storing (S2) said content part itself in said cache and recording (S3) at least one characteristic of the reception of said content part by the cache, upon transmission to the first client terminal;
- upon subsequent request (S4), by a second client terminal, for the same content part as the one stored in said cache, controlling (S5) the data sending rate, based on the recorded characteristic, while delivering the stored content part from said cache to the second client terminal.

## Description

### FIELD OF THE INVENTION

The present invention relates generally to the domain of the adaptive streaming technology over, for instance but not exclusively, HTTP (HyperText Transfer Protocol) and, in particular, to a method for adapting the behavior of a cache located along the transmission path between a client terminal and one or several servers.

### BACKGROUND OF THE INVENTION

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

Adaptive streaming over HTTP is quickly becoming a major technology for multimedia content distribution. Among the HTTP adaptive streaming protocols which are already used, the most famous are the HTTP Live Streaming (HLS) from Apple, the Silverlight Smooth Streaming (SSS) from Microsoft, the Adobe Dynamic Streaming (ADS) from Adobe and the Dynamic Adaptive Streaming over HTTP (DASH) developed by 3GPP within the SA4 group.

When a client terminal wishes to play an audiovisual content (or A/V content) in adaptive streaming, it first has to get a file describing how this A/V content might be obtained. This is generally done through the HTTP protocol by getting a descripting file, so-called manifest, from an URL (Uniform Resource Locator), but can be also achieved by other means (e.g. broadcast, e-mail, SMS and so on). The manifest basically lists the available representations of such an A/V content (in terms of bitrate, resolution and other properties); one representation per quality level (bit rate). Each representation is made of a series of chunks of equal duration - accessible by a separate URL - and has a set of descriptive elements attached for selection by the client. Said manifest is generated in advance and delivered to the client terminal by, for instance, a remote server.

Indeed, the stream of data corresponding to the A/V content is available on an HTTP server with different qualities. The highest quality is associated with a high bit rate, the lowest quality is associated with a low bit rate. This allows distribution to many different terminals which might be subject to highly varying network conditions.

The whole data stream is divided into chunks which are made such that a client terminal may smoothly switch from one quality level to another between two chunks. As a result, the video quality may vary while playing but rarely suffers from interruptions (also called freezes).

It is well-known that, according to its available bandwidth, a client terminal chooses the best representation at a given point in time to optimize the tradeoff between the quality (e.g. video quality) and the robustness to network variations. The available bandwidth is determined dynamically, at every received chunk. Indeed, the Round Trip Time (RTT), defined between the emission of an HTTP request for a given chunk and the reception of the corresponding HTTP response, is commonly measured and used to estimate the available bandwidth along the transmission path.

The reception rate at the client side varies in time when downloading a chunk. At starting time, the client terminal issues an HTTP request for a chunk. There is first a period of "idle" time corresponding to the RTT of said HTTP request. Then, packets of the chunk are received. These packets come at the peak rate of the connection. Finally, the reception rate falls again to zero when the downloading of the chunk is finished.

The client terminal is thus able to estimate both the RTT of an HTTP request and the available peak bandwidth, and then uses these estimated values to determine the maximum chunk size that might be requested with a high probability of being received within the duration of one chunk.

Moreover, client terminals also use some buffers to protect against sudden lack of bandwidth. To fill the buffer, such terminals request chunks small enough to be received in shorter time than the chunk duration, asking the next chunk as soon as the previous one was received. When the buffer is at its normal size, the client terminal tries to load chunks that fit the chunk duration. If some chunk loads too slowly, the buffer is consumed and the client terminal will try to fill it again with following chunks.

When a cache is along the transmission path between a client terminal and a remote server which frequently occurs, one chunk may be already stored in said cache, in case another client has previously requested the same chunk with the same representation or in case a Content Delivery Network (CDN) has already provisioned the chunk in the cache.

Thus, the response to an HTTP request for said given chunk is faster than if the chunk comes from the remote server. The RTT of the HTTP request between the client terminal and the cache may be much smaller than the one between the client terminal and the remote server, since the transmission path is shorter. This modification of the transmission parameters as observed by the client terminal is due to the inherent behavior of the cache, looking for serving the cached content as fast as possible.

In addition, in case of the presence of a cache along the transmission path (the requested chunk being stored in the cache), the peak rate may be better, especially when there is a congestion on said transmission path, located between the cache and the remote server.

Since a client terminal does usually not differentiate replies sent by a remote server or by an intermediate cache, it is mistakenly interpreting a bandwidth variation as a variation of the end-to-end network conditions, while it is in fact observing a switch of transmission path from the "client terminal to server" path to the "client terminal to cache" path.

Consequently, the bandwidth estimation performed by the client terminal is overestimated and does not accurately reflect the end-to-end transmission path characteristics as expected. In case of cached content, the client terminal usually estimates a greater bandwidth than the one expected with a connection to a remote server.

Such an overestimation generally leads to a poor experience for the end user. Indeed, if the estimated bandwidth is higher than expected, the adaptive streaming client terminal usually requests a chunk from a higher quality representation (for instance higher bit rate). This requested chunk has thus a lower probability to be in a cache (by assuming that the cache was filled by a previous client terminal playing the same multimedia content at a constant bit rate) as the representation changes. The downloading time associated with said requested chunk should be much longer than expected, resulting of a too late arrival of the requested chunk. The client terminal will then switch back to a lower quality representation, which is likely to be found in the cache again.

With the current implementation of caches, the effect of caching is annihilated by wrong decisions made by HTTP Adaptive Streaming (HAS) client terminals, leading to more cache misses and, ultimately, to cache thrashing (cache content keeps being replaced) and to a higher load on the network segment between the cache and the server with the risk of causing congestion.

As a consequence, the client terminal is switching back and forth between high and low quality chunks - constantly interrupted due to cache misses - which completely jeopardizes the benefits of caching.

The present invention attempts to remedy at least some of the above mentioned concerns for improving the quality of end user experience.

### SUMMARY OF THE INVENTION

The invention concerns a method for adapting the behavior of a cache located along the transmission path between a client terminal and a server, such a client terminal being able to receive from the server content parts of a multimedia content,
which is remarkable in that it comprises the steps of:
- upon request, by a first client terminal, for a content part not stored in the cache, storing said content part itself (retrieved from one or more servers) in said cache and recording at least one characteristic of the reception of said content part by the cache, upon transmission to the first client terminal;
- upon subsequent request, by a second client terminal, for the same content part as the one stored in said cache, controlling the data sending rate, based on the recorded characteristic, while delivering the stored content part from said cache to said second client terminal.

Thanks to the present invention, client terminals can benefit from caching, leading to save significant access bandwidth for a cache located, for instance, in a residential gateway or in a corporate proxy, and to save significant transit traffic for an Internet Service Provider cache.

Moreover, due to the present invention, a single stream of data can be carried through the access network to be consumed by two or more client terminals, if they have a similar connectivity towards the cache.

In addition, the present invention can avoid the accelerating effect of the cache for delay sensitive data (such as HTTP Adaptive Streaming content), by adapting the behavior of the cache when serving cached content in order to, for instance, mimic the network conditions as observed when requesting a content not yet cached from a remote server. This might prevent from bandwidth overestimation.

In a preferred embodiment according to the present invention, while delivering said content part stored in the cache to the second client terminal, the data sending rate of said content part is adapted such that the considered characteristic measured on the data flow sent by the cache equals the recorded characteristic. Thus, a client terminal consuming twice the same multimedia content can observe exactly the same transmission conditions for each content delivery, which leaves the bandwidth available for other applications.

As a variant or as a complement of said preferred embodiment, the data sending rate of said content part can be scaled up or scaled down based on at least one performance criterion.

Preferably, said recorded characteristic can correspond to the number of bytes received per time interval by the cache. In particular, the time interval used might depend on the nature of the requested content part.

Moreover, as a further variant or as a further complement, said characteristic can be derived from the arrival time of data packets forming said content part. In another aspect of the preferred embodiment, said characteristic can be recorded as observed by the cache.

In yet another variant, instead of arrival times, a set of statistical parameters representative of the transmission are computed over the considered time interval using well-known techniques present in popular network analysis tools like tcpdump and NetMate. These statistical parameters are recorded along with the content and replayed using well-known network emulation tools like NetEm.

In a further aspect of the preferred embodiment, said method can advantageously comprises the further step of detecting whether the content part is sensitive to transmission conditions along the transmission path or not.

In particular, the step of detecting can rely on an inspection of the request sent by said first client terminal.

In addition, in case the multimedia content is transmitted using the HTTP protocol, the inspection of said content part can consist in analysing the corresponding HTTP response.

Advantageously, the recording of the characteristic can be triggered when the content part is sensitive to transmission conditions.

Besides, the present invention can also concern a cache located along the transmission path between a client terminal and a server, such a client terminal being able to receive from the server content parts of a multimedia content.

According to the invention, it comprises:
- storage module for storing - upon request, by a first client terminal, for a content part not stored in the cache - said content part itself;
- a recording module for recording - upon said request - at least one characteristic of the reception of said content part, upon transmission to the first client terminal;
- a controlling module for controlling - upon subsequent request, by a second client terminal, of the same content part as the one stored in said cache - the data sending at a rate based on the recorded characteristic, while delivering the stored content part from said cache to said second client terminal.

Moreover, said controlling module can be configured to adapt the data sending rate of said content part such that the considered characteristic measured on the data sending rate equals the recorded characteristic, while delivering said content part stored in the cache to the second client terminal.

In addition, as a variant or as a complement, said controlling module can be configured to scale up or to scale down the data sending rate based on at least one performance criterion.

Certain aspects commensurate in scope with the disclosed embodiments are set forth below. It should be understood that these aspects are presented merely to provide the reader with a brief summary of certain forms the invention might take and that these aspects are not intended to limit the scope of the invention. Indeed, the invention may encompass a variety of aspects that may not be set forth below.

### BRIEF DESCRIPTION OF THE DRAWINGS

The invention will be better understood and illustrated by means of the following embodiment and execution examples, in no way limitative, with reference to the appended figures on which:
- Figure 1 is a schematic diagram of a Client-Server network architecture wherein the present invention might be implemented;
- Figure 2 is a block diagram of an example of a cache according to a preferred embodiment of the present invention;
- Figure 3 is a flow chart depicting the behavior adaptation algorithm implemented by the cache of Figure 2.

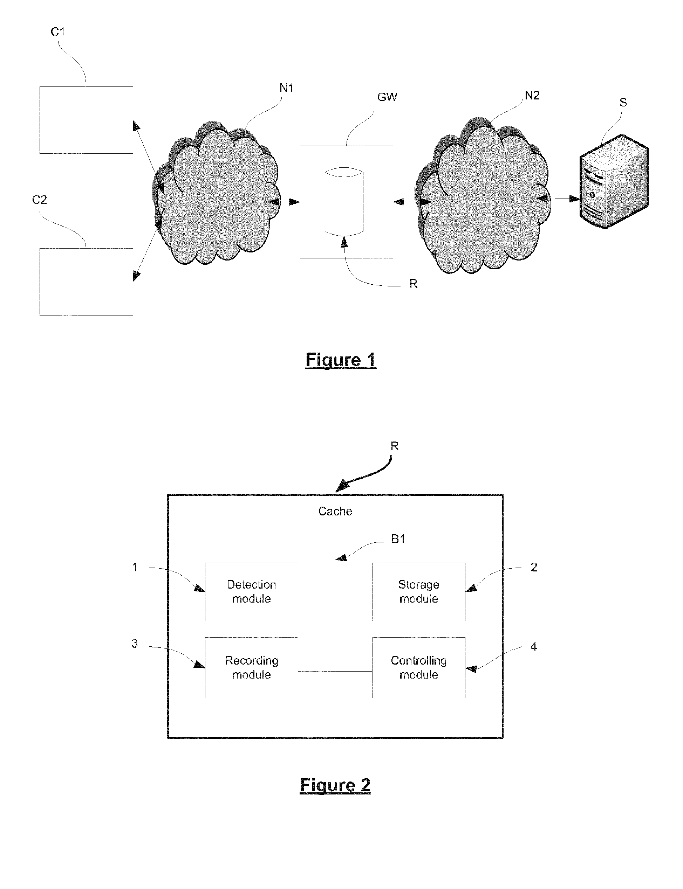

In Figures 1 and 2, the represented blocks are purely functional entities, which do not necessarily correspond to physically separate entities. Namely, they could be developed in the form of software, hardware, or be implemented in one or several integrated circuits, comprising one or more processors.

Wherever possible, the same reference numerals will be used throughout the figures to refer to the same or like parts.

### DETAILED DESCRIPTION OF PREFERRED EMBODIMENTS

It is to be understood that the figures and descriptions of the present invention have been simplified to illustrate elements that are relevant for a clear understanding of the present invention, while eliminating, for purposes of clarity, many other elements found in typical digital multimedia content delivery methods and systems. However, because such elements are well known in the art, a detailed discussion of such elements is not provided herein. The disclosure herein is directed to all such variations and modifications known to those skilled in the art.

According to a preferred embodiment, the present invention is depicted with regard to the HTTP adaptive streaming protocol. Naturally, the invention is not restricted to such a particular environment and other adaptive streaming protocols or more general transmission protocols could of course be considered and implemented.

As depicted in Figure 1, the Client-Server network architecture, wherein the present invention might be implemented, comprises several client terminals C1 and C2, a gateway GW and one or more HTTP servers S (only one is represented on Figure 1).

The client terminals C1 and C2 - connected to the gateway GW through a first network N1 (as a home network or an enterprise network) - may wish to connect to a HTTP server S through a second network N2 (as the Internet network). The first network N1 is connected to the second network N2 thanks to the gateway GW.

In particular, client terminals C1 and C2 can be portable media devices, mobile phones, tablets or laptops. Naturally, client terminals might not comprise a complete video player, but only some sub-elements such as the ones for demultiplexing and decoding the media content to the end user. In this case, client terminals are HTTP Adaptive Streaming (HAS) capable video decoders, such as set-top boxes.

The HTTP server S stream chunks to a client terminal C1, C2, upon the client request, using HTTP adaptive streaming protocol over one TCP/IP connection.

According to the preferred embodiment as described in Figure 2, the gateway GW comprises a cache R. In other words, the cache R is arranged along the transmission path between the client terminals C1 and C2 and a server S. In a variant, said cache R might be arranged in a proxy of the first network N1.

In the following, it is assumed that a client terminal C1, C2 requests an HTTP Adaptive Streaming multimedia content to a remote server S and, subsequently, another client terminal C2, C1 requests the same HAS multimedia content, or at least a part of it.

According to the invention, the cache R comprises a detection module 1 adapted for detecting whether or not a given multimedia content requested by a client terminal C1, C2 is sensitive to transmission conditions along the transmission path between said client terminal C1, C2 and a server S.

Since the cache R can observe all requests sent from client terminals C1 and C2, the detection module 1 is configured to inspect the request URLs in order to identify the requests that match file extensions corresponding to HAS traffic.

For instance, the following table - shown for illustrative purpose, without being exhaustive - lists commonly used file extensions identified as sensitive to transmission conditions:

| *Extension* | *Meaning* |
|---|---|
| *.m3u8 | Apple HLS manifest |
| *.ts | Apple HLS movie chunk (audio + video) |
| *.ismc | Microsoft Smoothstreaming manifest |
| *.ismv | Microsoft Smoothstreaming video fragment |
| *.isma | Microsoft Smoothstreaming audio fragment |
| *.f4m | Adobe HDS manifest |
| *.f4f | Adobe HDS movie fragment (audio or video) |
| *.mpd | MPEG-DASH manifest |
| *.m4s | MPEG-DASH movie segment |

If any of these extensions is encountered, then the detection module 1 assumes that the requesting multimedia content is a HAS content, which is, by definition, sensitive to the transmission conditions. Therefore, upon detection of such request (namely such extension), the cache R forwards the request to a server S - just like a well-known cache - but in addition triggers the recording of one or more characteristics (only one is described hereinafter) by a recording module 3 (depicted below).

In a variant or as a complement, the detection module 1 might inspect the HTTP response or the HTTP response header sent in response by a server S. In particular, when a HTTP response header indicates a content type corresponding to a manifest listing available representations of an HAS content (e.g. when the header is equal to "application/vnd.ms-sstr+xml") or when the content of the HTTP response comprises a string related to an HAS protocol (e.g. the "SmoothStreamingMedia" string), an HAS manifest is identified and the corresponding multimedia content is considered as being sensitive to transmission conditions.

Moreover, according to the preferred embodiment, the cache R comprises a storage module 2, such as a volatile memory and/or a permanent memory, for storing chunks of multimedia contents received from one or more servers S before their transmission to client terminals C1 and C2, requesting such multimedia contents.

In particular, the storage module 2 is configured to store a chunk n of representation r of a multimedia content - not stored yet in the cache R - upon request of said chunk n by a client terminal C1, C2.

In addition, the cache R further comprises a recording module 3 able to record - upon request of a first client terminal C1 - a characteristic relative to the link between the server S and the cache R of said chunk n (coming from the server S) to the first client terminal C1. Naturally, in a variant, more than one characteristic of reception might be used. In the preferred embodiment, the recording of the characteristic is triggered when the given multimedia content has been assessed as being sensitive to transmission conditions thanks to the detection module 1. Thus, for a multimedia content, or a part of it, not considered as being sensitive by detection module 1, the recording module 3 is not triggered. Obviously, it might be appreciated than the recording module 3 can be triggered both for sensitive and non-sensitive multimedia contents.

For instance, the characteristic - preferably recorded as observed by the cache R - can correspond to:
- the number of bytes received per time interval by the cache R during the reception of the chunk n of representation r requested by the first terminal C1. In particular, the time interval used might depend on the nature of the chunk n (e.g. HAS chunk). In an illustrative example in no way limitative, the number of bytes received from the server is sampled every 100 ms to reduce the amount of information to store as well as the extra processing load. This interval is reasonable to reproduce transmission conditions for HAS contents but may be too coarse for other types of traffic; and/or
- said characteristic is derived from the arrival time of data packets forming the requested chunk n of representation r. To this end, a packet capture tool might be used, resulting in a much higher fidelity capture of the transmission, offering the opportunity to reproduce exactly the transmission conditions as described hereinafter.

Preferably, the values of the characteristic are saved, once recorded, into a data structure (named hereinafter "vector of samples") together with the URL and the actual response data as depicted below:

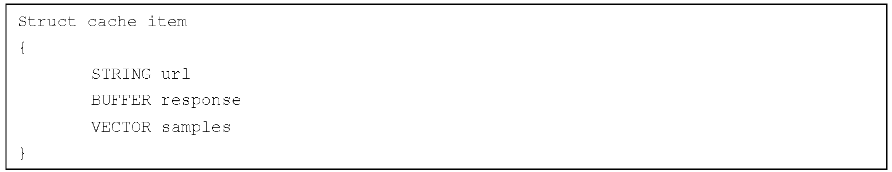

Such a data structure is saved into the storage module 2 for later use. In the preferred embodiment, the same data structure is used for "normal" traffic (considered by the detection module 1 as non-sensitive to transmission conditions), the vector of samples being, for instance, simply left empty.

According to said preferred embodiment, the cache R also comprises a controlling module 4 formed to adapt - upon subsequent request, by a second client terminal C2, of the same chunk n now recorded in the cache R - the data sending rate of said chunk n in function of the recorded characteristic, while delivering said chunk n to the second client terminal C2.

More precisely, the controlling module 4 is configured to adapt the data sending rate of said content part such that the considered characteristic measured on the data flow sent by the cache R equals the recorded characteristic, while delivering said content part stored in the cache to the second client terminal C2.

Upon later request, from the second client terminal C2, of the chunk n already stored in the cache R, the controlling module 4 looks up the values of the associated characteristic and uses them exactly as they were recorded, so as to attempt to reproduce the network conditions corresponding to the direct connection to the server S (previously reached by the first client terminal C1). No modification is performed on the recorded characteristic. For non-sensitive content since there is no record of the characteristic, there is no processing either.

In addition, as a variant or as a complement, the controlling module 4 might also be able to scale up or to scale down the sending rate based on one or more performance criteria (e.g. the load conditions along the transmission path Client/Server) to influence the reception of the requested chunk n by the second client terminal C2.

The modification of the data sending rate is achieved by applying on the recorded characteristic (e.g. the number of bytes per time interval) a predefined scaling factor. The computed characteristic is then used by the controlling module 4 to determine the data sending rate and to send the desired amount of data for each time interval (e.g. each 100 ms) to the second client terminal C2.

For instance, when the cached chunk n is retrieved from the server S, upon request of the first terminal C1, under high load conditions (e.g. many applications were active and were saturating the access bandwidth) and when the load conditions have returned to normal conditions while the second client terminal C2 requests cached chunk n, the controlling module 4 can scale up the sending rate, according to the scaling factor, such that it reaches the access bandwidth. The second client terminal C2 believes that the available bandwidth is higher, so that it requests the chunk n with a representation r' of higher quality. Such a chunk may not be cached, which is not an issue since bandwidth is available.

In a further aspect compliant with the present invention, a scheduling mechanism might be used to reduce the overlapping of responses to multiple clients. This scheduling mechanism results in adding an offset to the recorded characteristic, while retaining the same data sending rate.

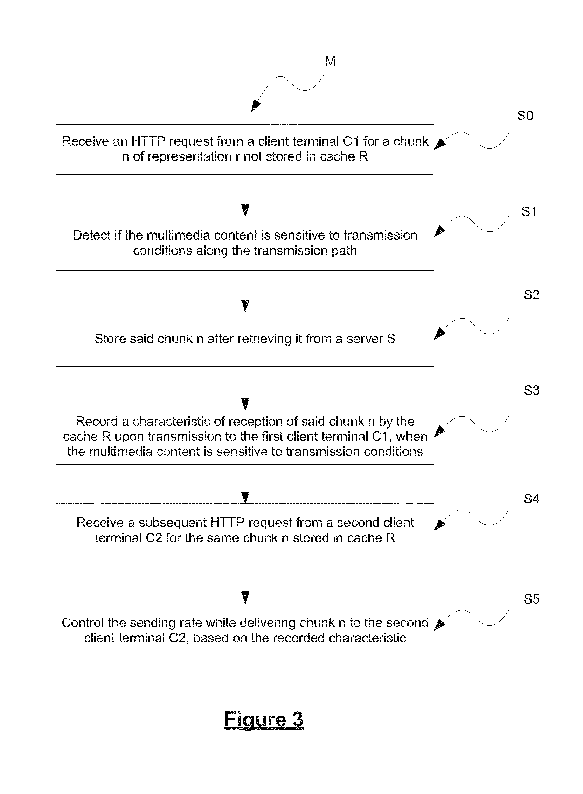

As shown on Figure 3, the cache R is configured to adapt its behavior when delivering cached contents to a client terminal C1, C2. More precisely, the cache R can implement the following adaptation mechanism M comprising the steps of:
- receiving (step S0) an HTTP request from a first client terminal C1 for a chunk n of representation r not stored in the cache R;
- detecting (step S1) if the multimedia content as requested is sensitive to transmission conditions along the transmission path;
- storing (step S2) said chunk n after retrieving it from a server S;
- recording (step S3) at least one characteristic associated with the reception of said chunk n by the cache R, upon transmission to the first client terminal C1, in case the multimedia content is sensitive to transmission conditions;
- receiving (step S4) a subsequent HTTP request from a second client terminal C2 for the same chunk n of same representation r stored in the cache R;
- controlling (step S5) the sending rate while delivering the chunk n to the second client terminal C2, based on the recorded characteristic:
   ■ by adapting the sending rate such that the considered characteristic measured on the data flow sent by the cache equals the recorded characteristic; and/or
   ■ by scaling up or scaling down the sending rate based on the performance criterion.

It should be understood that the order of the steps S0 to S5 may be changed, without departing from the present invention.

Besides, the cache R additionally comprises an internal bus B1 to connect the various modules 1 to 4 and all means (not represented in Figure 2) well known to the skilled in the art for performing the generic cache functionalities.

As already mentioned, the present invention is not restricted to HAS multimedia content, but may also concern every content sensitive to transmission conditions.

References disclosed in the description, the claims and the drawings may be provided independently or in any appropriate combination. Features may, where appropriate, be implemented in hardware, software, or a combination of the two.

Reference numerals appearing in the claims are by way of illustration only and shall have no limiting effect on the scope of the claims.

This invention having been described in its preferred embodiment, it is clear that it is susceptible to numerous modifications and embodiments within the ability of those skilled in the art and without the exercise of the inventive faculty. Accordingly, the scope of the invention is defined by the scope of the following claims.

In the claims hereof, any element expressed as a means for performing a specified function (e.g. detection module 2, controlling module 4, etc.) is intended to encompass any way of performing that function including, for example, a) a combination of circuit elements (for instance one or more processors) that performs that function or b) software in any form, including, therefore, firmware, microcode or the like, combined with appropriate circuitry for executing that software to perform the function. The present principles as defined by such claims reside in the fact that the functionalities provided by the various recited means are combined and brought together in the manner which the claims call for. It is thus regarded that any means that can provide those functionalities are equivalent to those shown herein.

## Claims

1. Method for adapting the behavior of a cache (R) located along the transmission path between a client terminal (C1, C2) and a server (S), such a client terminal (C1, C2) being able to receive from the server (S) content parts of a multimedia content,
**characterized in that** it comprises the steps of:
- upon request (S0), by a first client terminal (C1), for a content part not stored in the cache (R), storing (S2) said content part itself in said cache (R) and recording (S3) at least one characteristic of the reception of said content part by the cache, upon transmission to the first client terminal (C1);
- upon subsequent request (S4), by a second client terminal (C2), for the same content part as the one stored in said cache (R), controlling (S5) the data sending rate, based on the recorded characteristic, while delivering the stored content part from said cache (R) to said second client terminal (C2).

2. Method according to claim 1, wherein, while delivering said content part stored in the cache (R) to the second client terminal (C2), the data sending rate of said content part is adapted such that the considered characteristic measured on the data flow sent by the cache equals the recorded characteristic.

3. Method according to claim 1 or 2, wherein the data sending rate of said content part is scaling up or scaling down based on at least one performance criterion.

4. Method according to any of claims 1 to 3, wherein said recorded characteristic corresponds to the number of bytes received per time interval by the cache (R).

5. Method according to any of claims 1 to 4, wherein said characteristic is derived from the arrival time of data packets forming said content part.

6. Method according to any of claims 1 to 5, wherein said characteristic is recorded as observed by the cache (R).

7. Method according to any of claims 1 to 6, comprising the further step of detecting (S1) whether the content part is sensitive to transmission conditions along the transmission path or not.

8. Method according to claim 7, wherein the step of detecting relies on an inspection of the request sent by said first client terminal (C1).

9. Method according to claim 7 or 8, wherein the recording (S3) of the characteristic is triggered when the content part is sensitive to transmission conditions.

10. Cache located along the transmission path between a client terminal (C1, C2) and a server (S), such a client terminal (C1, C2) being able to receive from the server (S) content parts of a multimedia content,
**characterized in that** it comprises:
- storage module (2) for storing - upon request (S0), by a first client terminal (C1), for a content part not stored in the cache (R) - said content part itself;
- a recording module (3) for recording - upon said request - at least one characteristic of reception of said content part upon transmission to the first client terminal (C1);
- a controlling module (4) for controlling - upon subsequent request, by a second client terminal (C2), for the same content part as the one stored in said cache (R) - the data sending rate based on the recorded characteristic, while delivering the stored content part from said cache (R) to said second client terminal (C2).

11. Cache according to claim 10, wherein said controlling module (4) is configured to adapt the data sending rate of said content part such that the considered characteristic measured on the data sending rate equals the recorded characteristic, while delivering said content part stored in the cache (R) to the second client terminal (C2).

12. Cache according to claim 10 or 11, wherein said controlling module (4) is configured to scale up or to scale down the data sending rate based on at least one performance criterion.
